# FASCICULE DE BREVET EUROPEEN

(11) **EP 1 354 671 B1**
(45) Date de publication et mention de la délivrance du brevet: **16.03.2005**
(21) Numéro de dépôt: 03101001.0
(22) Date de dépôt: 14.04.2003
(51) Int. Cl.: B25J 21/02, G21F 7/04, H04B 10/10

(54) **Système de transmission sans fil pour boite à gants**
Drahtloses Datenübertragungssystem für einen Handschuhkasten
Wireless data transmission system for a glove box

(30) Priorité: 16.04.2002 FR 0204726
(43) Date de publication de la demande: 22.10.2003
(73) Titulaire: COMMISSARIAT A L'ENERGIE ATOMIQUE, 75752 Paris Cédex 15 (FR)
(72) Inventeur: BENOIT, Guy, 91400, ORSAY (FR)
(74) Mandataire: Poulin, Gérard

(56) Documents cités:
- EP-A- 0 493 884
- EP-A- 0 859 479
- US-A- 4 864 652
- US-A- 5 519 527

## Description

### Domaine technique

L'invention se situe dans le domaine des boîtes à gants. Elle concerne en particulier un système de transmission bidirectionnel entre l'intérieur de la boîte à gants et l'extérieur de la boîte à gants.

### Arrière plan technologique

Une boîte à gants est une enceinte étanche à l'intérieur de laquelle sont effectuées des opérations au moyen de robots ou d'outillages automatiques ou télécommandés. De telles boîtes à gants sont utilisées par exemple dans l'industrie électronucléaire pour manipuler des matières fissiles. Les communications entre l'extérieur et l'intérieur de la boîte à gants se font de façon visuelle, par exemple au travers d'une plaque en matériau transparent. Les communications entre l'extérieur et l'intérieur de la boîte à gants se font aussi de façon filaire. Dans ce cas l'enceinte est équipée de moyens de connexion filaire passant de façon étanche au travers de l'une des parois de l'enceinte. Les moyens étanches de connexion filaire sont constitués d'embases et de prises étanches. Grâce à ces liaisons les informations captées par de nombreux capteurs présents dans la boîte à gants peuvent être transmises à l'extérieur de la boîte à gants puis traitées. Les capteurs peuvent être par exemple des interrupteurs de fin de course fournissant une information de type tout ou rien (TOR) des capteurs par exemple de température ou pression émettant des courants variables avec la valeur captée entre 4 et 20 mA. Les liaisons fil à fil lient les capteurs à un automate programmable industriel (API).

Lorsqu'il est nécessaire d'ajouter un capteur, une nouvelle liaison filaire doit être installée entre le nouveau capteur et l'automate programmable industriel (API). Il convient donc dans ce cas que des bornes soient disponibles sur les traversées étanches de cloison. Si toutes les bornes de traversée étanche sont occupées, il devient nécessaire de percer la cloison pour ajouter une nouvelle traversée. Cette opération nécessite des précautions particulières, notamment lorsque l'intérieur de la boîte à gants est actif. Cela rend l'opération dangereuse et onéreuse.

Le document US 4864652 (Frank S. Austin, Albert B. Hance) décrit une méthode et un dispositif pour transmettre par ondes infrarouges des données provenant d'un capteur de radioactivité situé dans un espace clos contaminé, comme par exemple une boîte à gants, vers un module de réception à l'extérieur de la boîte. La transmission de donnée est toutefois unidirectionnelle (intérieur vers extérieur) et l'utilisation des données par le module externe est limitée à l'affichage sur un écran à cristaux liquides.

### Brève description de l'invention

L'invention a pour objet une liaison bidirectionnelle entre l'intérieur et l'extérieur d'une boîte à gants permettant une augmentation du nombre de liaison entre des capteurs et un automate programmable industriel, sans qu'il soit nécessaire de modifier de façon physique les traversées filaires au travers d'une cloison étanche de la boîte à gants. Pour cela il est prévu selon l'invention d'utiliser une liaison sans fils entre un module interne à la boîte à gants, et un module externe à la boîte à gants. La liaison sans fil peut être réalisée de façon connue par une liaison par ondes radiofréquence ou lumineuse, par exemple infrarouge, au travers de parties de paroi étanche de la boîte à gants transparentes respectivement aux dites ondes radiofréquence ou lumineuses. Le module interne reçoit sur des liaisons parallèles les informations en provenance des différents capteurs. Ces liaisons peuvent elles-mêmes être filaires ou radiofréquence ou lumineuses. Le module interne sérialise les informations en provenance des différents capteurs. Le module externe extrait du flux série en provenance du module interne les informations relatives à chaque capteur et les multiplexe de façon parallèle vers l'API. L'alimentation électrique du module interne et de capteurs est réalisée par une ou plusieurs cellules photovoltaïques recevant de l'énergie lumineuse au travers de parties de parois étanches de la boîte à gants transparentes aux ondes lumineuses. Ainsi il n'est pas nécessaire non plus de prévoir des traversées étanches pour une alimentation par fils des dispositifs ajoutés dans la boîte à gants. Il n'est pas nécessaire non plus de prévoir une batterie d'alimentation à l'intérieur de la boîte à gants, et de ce fait le volume de déchets irradiés n'est pas augmenté. Le module externe reçoit de l'automate industriel programmable les interrogations ou instructions et les transmet au module interne par l'intermédiaire de la liaison bidirectionnelle.

En résumé l'invention est relative à un ensemble comprenant une boîte à gants à l'intérieur de laquelle sont disposés de façon fixe ou mobile différents capteurs de grandeurs, des informations captées par ces capteurs étant transmises par des moyens de transmission, au travers de cloisons étanches de la boîte à gants vers un automate programmable industriel, ensemble caractérisé en ce que les moyens de transmissions entre les capteurs et l'automate programmable industriel comprennent :
- un module interne à la boîte à gants recevant lesdites informations captées par chaque capteur et multiplexant sur une liaison bidirectionnelle série par ondes radiofréquence ou lumineuses au travers d'une partie de paroi de la boîte à gants transparente aux dites ondes radiofréquence ou lumineuses, les dites informations captées par chaque capteur ;
- une ou plusieurs cellules photovoltaïques, alimentant en puissance électrique ledit module interne ;
- une ou plusieurs sources lumineuses situées à l'extérieur de la boîte à gants alimentant la ou lesdites cellules photovoltaïques en énergie lumineuse au travers de parties de paroi de la boîte à gants transparentes à ladite énergie lumineuse ;
- une liaison entre chacun des capteurs et ledit module interne,
- un module externe à la boîte à gants couplé à l'automate industriel programmable et à la liaison bidirectionnelle série entre les modules interne et externe, pour recevoir les informations multiplexées en provenance des capteurs et les transmettre audit automate industriel programmable sur des liaisons parallèles, et pour transmettre des informations au module interne par la liaison bidirectionnelle série.

### Brève description des dessins

Un exemple de réalisation et des variantes, ainsi que le fonctionnement présentant les caractéristiques de l'invention seront maintenant décrits en regard des dessins annexés dans lesquels :
- la figure 1 est un schéma représentant le mode général de réalisation de l'invention,
- la figure 2 est un schéma représentant un exemple de réalisation de la partie interne à la boîte à gants,
- la figure 3 comporte deux courbes, la première représente un signal portant une information émise en mode série à la cadence de 19200 bauds et la seconde représente la même information transmise à la même cadence après transformation des impulsions destinée à réduire la puissance nécessaire à l'émission du signal d'information,
- la figure 4 est un schéma représentant un exemple de réalisation de la partie externe à la boîte à gants.

### Description d'exemples de réalisation

Dans la description qui va suivre les éléments ayant même fonction portent le même numéro de référence dans les différentes figures. La description d'un élément déjà décrit ne sera pas nécessairement reprise dans la description d'une figure où cet élément figure à nouveau.

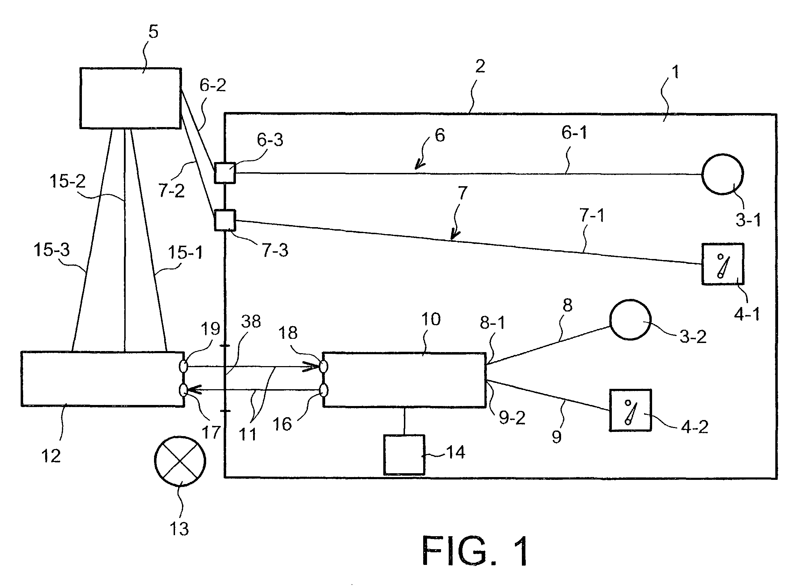

Un mode général de réalisation de l'invention sera maintenant décrit en relation avec la figure 1.

Cette figure représente de façon schématique une boîte à gants 1. Cette boîte 1 est entourée d'une paroi étanche 2. Cette boîte contient divers outils non représentés. Seuls sont représentés les éléments de cette boîte qui intéressent directement l'invention. La boîte contient notamment des capteurs, par exemple des capteurs de grandeurs intéressant le fonctionnement de la boîte à gants et donnant des valeurs de pression de température, d'angles, de vitesses de déplacement ou de rotation, etc. Sur la figure 1 on a représenté de façon symbolique un premier capteur 3-1 d'une première grandeur dont l'expression est traduite par un courant compris entre 4 et 20 mA, et un second capteur 4-1 d'une seconde grandeur dont l'expression se traduit par un signal tout ou rien. Le capteur 4-1 pourra être comme représenté symboliquement sur les figures un capteur d'un contact ouvert ou fermé. Ces capteurs communiquent de façon connue avec un automate programmable industriel 5 situé à l'extérieur de la boîte à gants. La communication se fait au moyen de liaisons filaires. Une première partie 6-1 d'une liaison filaire 6 relie le capteur 3-1 à une première traversée étanche 6-3 de la cloison étanche 2. Une seconde partie 6-2 de la liaison filaire 6 relie la première traversée étanche 6-3 de la cloison étanche 2 à l'automate programmable industriel 5 situé à l'extérieur de la boîte à gants. De la même façon connue le capteur 4-1 est couplé à l'automate programmable industriel 5 situé à l'extérieur de la boîte à gants par une liaison filaire 7, comportant une partie 7-1 à l'intérieur de la boîte à gants 1, une traversée étanche 7-3 et une partie 7-2 à l'extérieur de la boîte à gants 1. Naturellement le nombre de capteurs et de traversées étanche n'est pas limité à ce qui est représenté sur la figure 1. Pour une installation existante le nombre des capteurs est cependant limité par le nombre de bornes disponibles sur les traversées étanches. L'augmentation du nombre de ces traversées entraîne les problèmes expliqués plus haut. Selon l'invention, la transmission des données de capteurs supplémentaires d'une installation existante est réalisée sans traversée au moyen d'une liaison par ondes radiofréquence ou lumineuses. Naturellement une telle liaison permettant de transmettre des données en provenance de capteurs supplémentaires peut être envisagée dès la conception de la boîte à gants de façon à faciliter des modifications non envisagées au départ.

Sur la figure 1 on a représenté de façon symbolique un premier capteur supplémentaire 3-2 d'une première grandeur dont l'expression est traduite par un courant compris entre 4 et 20 mA, et un second capteur supplémentaire 4-2 d'une seconde grandeur dont l'expression se traduit par un signal tout ou rien. Comme les capteurs initiaux 3-1 et 4-1, ces capteurs supplémentaires doivent communiquer avec l'automate programmable industriel 5 situé à l'extérieur de la boîte à gants. La communication se fait de la façon suivante. Une première liaison 8 relie le capteur 3-2 à une entrée 8-1 d'un module interne 10 dont la fonction sera commentée ultérieurement. Une seconde liaison 9 relie le capteur supplémentaire 4-2 à une entrée 9-2 du module interne 10. Les liaisons 8 et 9 ont été représentées sous forme filaire sur la figure 1. Ces liaisons peuvent aussi être des liaisons lumineuses, par exemple infrarouges, ou radiofréquence. Les capteurs ont chacun leur propre liaison avec le module 10. De la sorte au niveau du module 10 il est possible d'identifier chaque capteur en identifiant une entrée du module 10. Le module interne 10 reçoit de façon périodique prédéterminée ou sur interrogation les données en provenance des différents capteurs. Sa fonction est de transmettre les différentes informations en provenance de ces capteurs, au moyen d'une liaison 11 par ondes radiofréquence ou lumineuses, à un module externe 12. Dans l'exemple représenté figure 1, la liaison 11 est une liaison infrarouge qui s'effectue au travers d'une partie 38 de la paroi 2 transparente à l'infrarouge. La liaison 11 est bidirectionnelle et s'effectue de l'intérieur vers l'extérieur périodiquement ou sur réception d'une demande provenant de l'extérieur. Ainsi elle s'effectue de l'intérieur de la boîte 1 vers l'extérieur par un premier moyen 16 interne d'émission, par exemple une antenne si la liaison est par ondes radiofréquence, ou comme dans l'exemple ici commenté, au moyen d'une diode émettrice 16 du module interne 10. Du côté réception un premier moyen 17 externe de réception d'une onde lumineuse, une diode 17, ou radiofréquence, une antenne, est positionné de façon à recevoir l'onde lumineuse ou radiofréquence transmise par le premier moyen interne 16 d'émission d'une onde lumineuse ou radiofréquence. Dans l'exemple ici commenté, il s'agit d'une diode réceptrice 17 du module externe 12. La liaison s'effectue de l'extérieur de la boîte 1 vers l'intérieur au moyen d'une diode émettrice 19 du module externe 12 vers une diode réceptrice 18 du module interne 10. Naturellement il s'agirait d'antennes ou d'éléments rayonnant si la liaison était faite par ondes radiofréquence. La liaison entre le module externe 12 et l'automate programmable industriel 5 s'effectue au moyen de liaisons bidirectionnelles par exemple filaires 15 dont 3 référencées 15-1 à 15-3 ont été représentées. Le module interne 10 est alimenté en énergie électrique par une cellule photovoltaïque 14. Cette cellule photovoltaïque 14 est elle-même alimentée en énergie lumineuse par un moyen d'éclairage 13 placé à l'extérieur de la boîte 1 et transmettant sa lumière au travers d'une partie transparente non représentée de la paroi 2. De préférence le moyen d'éclairage 13 sera une source au sodium. De préférence la cellule photovoltaïque 14 est placée directement contre la partie de paroi transparente et un joint anti-poussières non représenté isole un espace entre la paroi 2 et la cellule photovoltaïque 14.

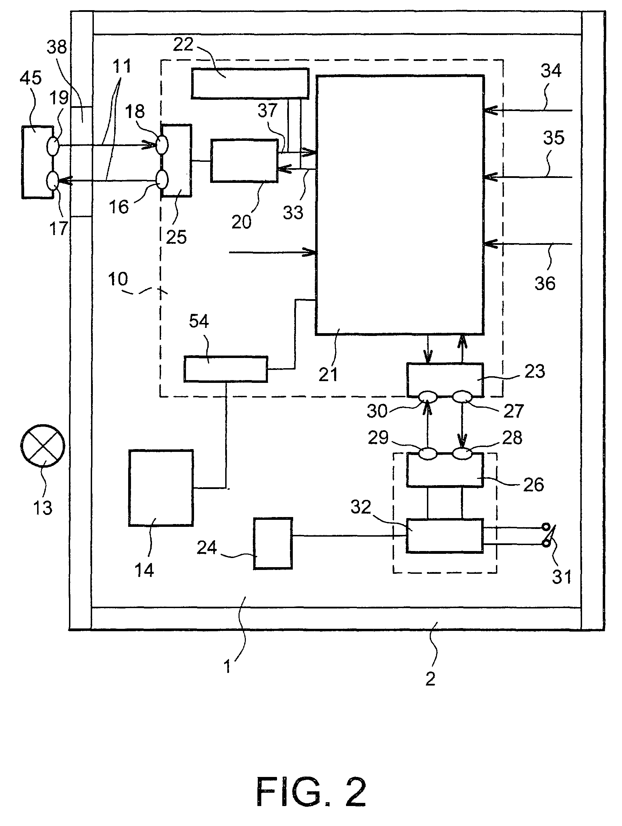

Un exemple de réalisation d'un module interne 10 est représenté schématiquement figure 2.

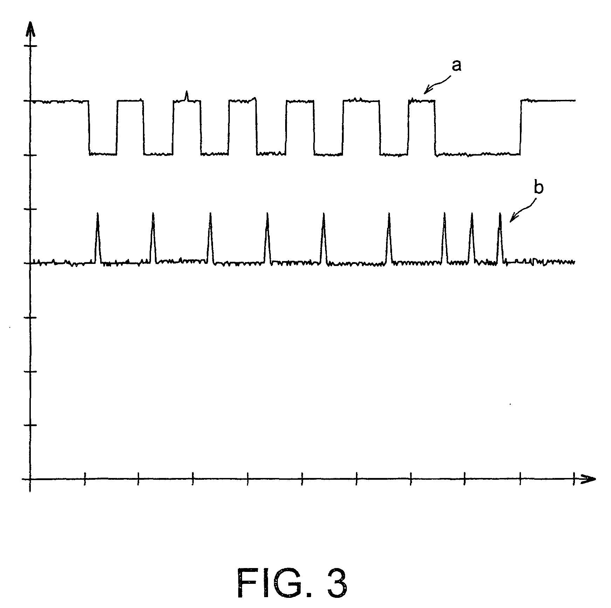

Le module interne 10 est articulé autour d'un microcontrôleur 21, par exemple un AduC812 de Analog Device. Le microcontrôleur 21 comporte une connexion 22, comme représenté par un bloc figure 2, couplée à la sortie 33 et à l'entrée 37 dudit microcontrôleur 21. Il sera vu plus loin que la connexion 22 permet de télécharger un programme et des données reçues de l'extérieur et destinés au microcontrôleur 21 pour être stockés dans sa mémoire. Il est ainsi possible de modifier de l'extérieur le programme de transmission des données pour tenir compte d'un changement des conditions d'exploitation dans la boîte à gants 1. Un circuit de codage 20, par exemple un circuit HSDL-7001 de Agilent Technologies est couplé à une mémoire du microcontrôleur 21, par les entrées/sorties 37, 33 respectivement du microcontrôleur 21. Le circuit de codage 20 est également couplé à un premier circuit interne 25 de réception, lui-même couplé au premier moyen interne 18 de réception. Dans l'exemple représenté le circuit 25 est un circuit de traitement des signaux reçus ou à émettre par les diodes infrarouges 18, 16 respectivement. La fonction du circuit de codage 20 est de transformer les valeurs "0" à émettre en des impulsions très brèves, par exemple 1,6µs, et à transformer les valeurs "1" à émettre, en absence d'impulsions. Ainsi seules les valeurs "0" donnent lieu à une émission infrarouge, et cette émission est très brève. On réduit ainsi la consommation d'énergie. La figure 3 montre un exemple de la transformation réalisée par ce circuit de codage 20. Cette figure comporte une courbe supérieure a, représentant un signal composé d'une succession dans le temps de valeurs hautes représentant des 1 et de valeurs basses représentant des 0. Le signal à transmettre est un signal binaire codé sans retour à 0 (NRZ). La courbe inférieure b représente ce même signal après transformation par le circuit de codage 20. On voit qu'à chaque valeur basse du signal initial représenté en a, correspond une valeur haute brève du signal transformé représenté en b.

Dans l'exemple représenté figure 2, l'alimentation 14 comporte un circuit de régulation 54, comportant par exemple notamment une diode zener et destiné à fournir une tension d'alimentation limitée à une valeur supérieure, par exemple 5 volts. Dans l'exemple représenté l'installation comporte notamment un interrupteur fin de course 31. Naturellement, en général il y a plus d'un interrupteur fin de course par boîte. Pour capter l'état de cet interrupteur, la boîte à gants 1 renferme un capteur mobile 32. Elle renferme en outre une cellule 24 photovoltaïque dédiée d'alimentation en puissance électrique dudit capteur mobile 32, couplée électriquement audit capteur mobile 32. La cellule dédiée 24 permet une liaison mécanique entre l'alimentation électrique et le capteur, en sorte que l'alimentation peut suivre les mouvements du capteur 32. Il peut y avoir autant de cellules photovoltaïques dédiées que de capteurs mobiles. La liaison entre le capteur 32 et le module interne 10 peut être lumineuse, par exemple infrarouge. Dans l'exemple représenté c'est une liaison infrarouge. Pour réaliser cette liaison, un dispositif représenté en pointillés figure 2 composé d'un premier circuit 26 de transformation d'un signal électrique provenant dudit au moins un capteur mobile 32 en un signal porté par ondes radiofréquence ou lumineuses et dudit capteur 32 est couplé à ladite cellule 24 photovoltaïque dédiée.

Un second moyen 29 d'émission dudit signal porté par ondes radiofréquence ou lumineuses est couplé audit premier circuit 26 de transformation de signal pour émettre ledit signal en direction d'un troisième moyen 30 de réception couplé au module interne 10. Le module interne 10 comprend outre le troisième moyen 30 de réception un troisième circuit 23 interne de réception lui-même couplé au microprocesseur 21. Dans l'exemple commenté en liaison avec la figure 2, le premier circuit 26 couplé à ladite cellule photovoltaïque 24 d'alimentation dédiée, de transformation d'un signal électrique provenant dudit au moins un capteur mobile 32 en un signal porté par ondes radiofréquence ou lumineuses est également un circuit 26 de transformation d'un signal porté par ondes radiofréquence ou lumineuses en signal électrique. Cette caractéristique associée à d'autres dont il sera parlé plus loin permet au capteur d'être interrogé par le module 10 en sorte que l'information d'état de l'interrupteur 31 devient disponible à la demande. Pour assurer cette interrogation, la boîte à gants loge en outre, des seconds moyens 29 d'émission de signal porté par ondes radiofréquence ou lumineuses et couplés audit premier circuit 26 de transformation de signal pour recevoir un signal provenant du module interne 10. Le module interne 10 émets un signal d'interrogation dudit capteur 32 mobile et ledit circuit 26 de transformation transmets au reçu de cette interrogation, dans une fenêtre temporelle prédéterminée, l'état dudit capteur 32 au circuit 26 d'émission et de réception de signal porté par ondes radiofréquence ou lumineuses. La fenêtre temporelle est instaurée pour qu'au moment de l'émission du signal donnant l'état de l'interrupteur 31 capté par le capteur 32, la partie de réception du circuit 26 d'émission et de réception de signal soit neutralisée. De la sorte la transmission du signal donnant l'état du capteur 32, n'est pas confondue avec une interrogation provenant du microprocesseur 21 par l'intermédiaire du circuit 23 et du moyen de transmission 27. A cette fin une partie réception dudit premier circuit 26 de transformation de signal d'émission et de réception est pourvu de moyens de neutralisation en eux même connus et non représentés, neutralisant ladite partie réception au reçu du signal d'interrogation en provenance du module interne 10, pendant une période de temps englobant la fenêtre temporelle allouée audit circuit 26 pour transmettre l'état dudit au moins un capteur mobile 32.

La description de la figure 2 a pour objet essentiel de montrer un mode de réalisation du module interne 10, et un exemple de liaison non filaire entre ce module interne 10 et un capteur mobile, par exemple lié à un interrupteur de fin de course. C'est pourquoi d'autres capteurs n'ont pas été représentés. Ces capteurs, s'ils existent, transmettent leurs informations au microprocesseur 21 sur des entrées/sorties 34, 35 et 36 permettant si nécessaire, une interrogation de l'état des capteurs. Les entrées 34, 35 sont des entrées tout ou rien (TOR). L'entrée 36 représente 8 entrées analogiques. Des circuits d'adaptation peuvent être présents si nécessaire entre un capteur et une entrée du microcontrôleur 21.

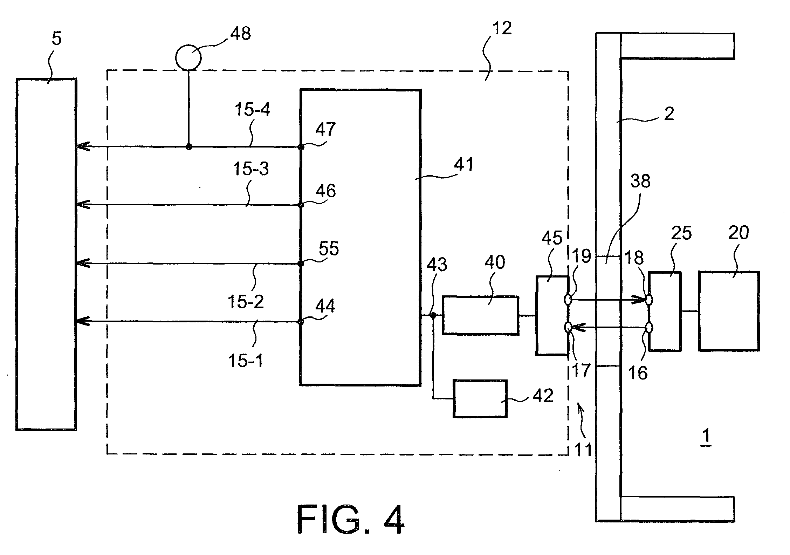

Une description du module externe 12 sera maintenant effectuée en liaison avec la figure 4.

Le module 12 externe à la boîte à gants 1 comporte des moyens 17, 19, 45, 40, 43 formant une partie externe de la liaison 11 par ondes lumineuses ou radiofréquence. Ces moyens qui assurent la liaison comportent :
- un premier moyen 17 externe de réception d'une onde lumineuse ou radiofréquence positionné de façon à recevoir une onde lumineuse ou radiofréquence transmise par le premier moyen interne 16 d'émission d'une onde lumineuse ou radiofréquence. Ce moyen 17 est apparié au moyen 16 interne. Dans le cas représenté sur les figures 2 et 4, le moyen 16 est une diode d'émission infrarouge, et le moyen 17 est une diode réceptrice.

Un premier circuit externe 45 de réception et comme cela sera vu plus loin d'émission, couplé au premier moyen 17 externe de réception d'une onde lumineuse ou radiofréquence, transforme le signal reçu par le premier moyen 17 externe de réception en signal électrique.

Le module 12 externe comporte en outre un microcontrôleur 41 externe ayant une entrée/sortie série 43 et des entrées/sorties 44, 55, 46. L'entrée/sortie série 43 est couplée au premier circuit externe 45 de réception via le circuit 40, pour recevoir les données en provenance dudit circuit 45 de réception. Les entrées/sorties 44, 55, 46 du microcontrôleur 41 externe sont couplées aux liaisons 15 avec l'automate 5 industriel programmable.

Dans l'exemple représenté figure 4, le microcontrôleur 41 externe a une sortie 47 couplée à un moyen 48 de visualisation, par exemple une diode électroluminescente, d'une interruption de la liaison 11 entre le module interne 10 et le module externe 12. Cette visualisation est importante car elle permet à un opérateur de remédier à un défaut qui peut provenir, par exemple dans le cas de la liaison infrarouge, d'un simple encrassement de la partie 38 de paroi de la boîte 1.

Dans le cas représenté figure 4, un circuit 40 externe de codage est couplé entre l'entrée 43 série du microcontrôleur 41 externe et le circuit 45 externe de réception d'une onde lumineuse. Ce circuit de codage 40 correspond au circuit de codage 20 du module interne 10. Le circuit de codage 40 est destiné à former un signal électrique logique d'entrée du microcontrôleur, à partir d'un signal de réception fournit par ledit circuit 45 de réception. En conséquence ledit signal logique en sortie du circuit 40 a un niveau haut pour chaque absence d'impulsions de sortie du circuit 45 de réception et un niveau logique bas pour chaque impulsion brève en sortie dudit circuit 45 de réception.

Dans l'exemple représenté en liaison avec les figures 2 et 4, le microcontrôleur 21 du module interne 10 est équipé d'une connexion de téléchargement externe 22, et le microcontrôleur 41 du module externe 12 est équipé d'une connexion de téléchargement 42, représenté par un bloc sur la figure 4. Le module externe 12 est équipé de moyens d'émission formés par une partie du circuit d'émission et de réception 45, permettant à la liaison 11 d'être bidirectionnelle. Le module externe 12 comporte en outre à cette fin :
un premier moyen 19 externe d'émission d'une onde radiofréquence ou lumineuse,
le premier circuit externe 45 d'émission couplé en sortie au premier moyen 19 externe d'émission et couplé en entrée à l'entrée/sortie 43 du microcontrôleur externe 41, pour transformer un signal électrique provenant dudit microcontrôleur externe 41, en un signal radiofréquence ou lumineux reçu par le premier moyen 19 externe d'émission.

Ainsi dans l'exemple représenté les circuits 45, 25, 26 sont des circuits de transformation d'un signal infrarouge en signal électrique et réciproquement.

Le fonctionnement est le suivant :

Après une phase d'initialisation un message d'interrogation en provenance, par exemple de l'automate industriel programmable 5, ou formé par le microcontrôleur externe 41, est envoyé du microcontrôleur externe 41 vers le microcontrôleur interne 21. Le message est envoyé par l'intermédiaire de l'entrée/sortie 43 du microcontrôleur externe 41, du circuit de codage 40, de la partie émission du circuit d'émission et réception 45, de la diode émettrice infrarouge 19, de la diode réceptrice infrarouge 18, de la partie réception du circuit d'émission et de réception 25. Cette interrogation est exécutée périodiquement, par exemple toutes les 10 µs. Les informations relatives à l'état des capteurs sont reçues par le microcontrôleur interne 21, de façon constante ou sur interrogation. Le microcontrôleur interne 21 met ces informations sous forme d'un message série. L'ordre des données dans ce message permet de retrouver le capteur à l'origine de la donnée, en sorte que le message ne contient pas de partie destinée à identifier les capteurs. Le message préparé est ensuite transmis du microcontrôleur interne 21 au microcontrôleur externe 41. Cette transmission se fait au travers de la sortie 33 du microcontrôleur interne 21, du circuit de codage 20, dans le cas où un tel circuit est prévu, de la partie émission du circuit d'émission et de réception 25, de la diode d'émission infrarouge 16, de la diode de réception infrarouge 17, du circuit de codage 40 pour arriver enfin sur l'entrée sortie 43 du microcontrôleur externe 41. Selon une particularité destinée à réduire la quantité d'informations transmise, applicable aux capteurs tout ou rien, donnant par exemple, comme le capteur 32, l'état d'un interrupteur 31, par exemple de fin de course, le second moyen 29 d'émission dudit signal porté par ondes radiofréquence ou lumineuses couplé audit premier circuit 26 de transformation de signal, lui-même couplé au capteur 32, ne transmet un signal d'état dudit capteur 32 que si l'interrupteur 31 est fermé, aucune information d'état n'étant transmise lorsque l'interrupteur est ouvert.

Dans les exemples commentés en liaison avec les figures 2 et 4, la liaison entre le module interne 10 et le module externe 12 est une liaison infrarouge. Cette liaison comporte, comme expliqué plus haut, à l'intérieur du module interne 10, un moyen 25 d'adaptation d'un signal électrique reçu du circuit de codage 20 pour le transformer en un signal adapté à être appliqué à la diode émettrice infrarouge 16. De même la diode réceptrice 17 du module externe 12, positionnée pour recevoir les émissions de la diode 16, est couplée à un circuit 45 de transformation du signal infrarouge reçu en signal électrique adapté à être reçu par le circuit de codage 40 du module externe 12.

De même, dans les exemples commentés en liaison avec les figures 2 et 4, la liaison entre le module externe 12 et le module interne 10 est une liaison infrarouge. Cette liaison comporte également, comme expliqué plus haut, à l'intérieur du module externe 12, un moyen 45 d'adaptation d'un signal électrique reçu du circuit de codage 40 pour le transformer en un signal adapté à être appliqué à la diode émettrice infrarouge 19. De même la diode réceptrice 18 du module interne 10, positionnée pour recevoir les émissions de la diode 19, est couplée à un circuit 25 de transformation du signal infrarouge reçu en signal électrique adapté à être reçu par le circuit de codage 20 du module interne 10.

Lorsque la liaison entre les modules interne 10 et externe 12 est assurée par ondes radiofréquence, les diodes émettrices 16, 19 sont remplacées par des antennes d'émission 16', 19' non représentées sur les figures, et les diodes réceptrices 18, 17 par des antennes de réception 18', 17' non représentées sur les figures. De façon connue si les fréquences d'émission et de réception sont assez proche l'une de l'autre, ce qui est le cas la plupart du temps pour ce type de liaison, les antennes d'émission et de réception d'un module peuvent être remplacées par une antenne unique couplée à un duplexeur. Dans ce cas les modules 25 et 45 sont des modules 25', 45', non représentés, émetteur récepteur radiofréquence, couplés aux antennes éventuellement par l'intermédiaire d'un duplexeur.

Les mêmes remarques s'appliquent mutatis mutandis, pour une liaison interne à la boîte à gants 1 comme celle représentée à titre d'exemple entre le module 10 et le capteur 32. Les modules 23 et 26 peuvent être des émetteurs récepteurs radiofréquence. Dans ce cas les diodes émettrices et réceptrices 27-30 sont à remplacer par des antennes émettrices et réceptrices ou par des antennes à la fois émettrice et réceptrice couplées chacune à un duplexeur.

Il convient de noter que l'ensemble automate programmable industriel et module externe 12, peut être remplacé par un ordinateur équipé d'une liaison bidirectionnelle infrarouge ou radiofréquence.

## Revendications

1. Ensemble comprenant une boîte (1) à gants à l'intérieur de laquelle sont disposés de façon fixe ou mobile différents capteurs de grandeurs, des informations captées par ces capteurs étant transmises par des moyens de transmission, au travers de paroi (2) étanches de la boîte à gants vers un automate (5) programmable industriel, ensemble **caractérisé en ce que** les moyens de transmission entre les capteurs et l'automate programmable industriel comprennent :
à l'intérieur de la boîte (1) à gants
- un module (10) interne à la boîte (1) à gants recevant lesdites informations captées par chaque capteur (3-2, 4-2) et multiplexant sur une liaison bidirectionnelle (11) série par ondes radiofréquence ou lumineuses au travers d'une partie (38) de paroi (2) de la boîte à gants transparente aux dites ondes radiofréquence ou lumineuses, les dites informations captées par chaque capteur (3-2, 4-2),
- une ou plusieurs cellules (14, 24) photovoltaïques, couplées audit module (10) interne et éventuellement à d'autres capteurs (32) ou circuits électriques (26) internes à la boîte à gants (1) pour alimenter en puissance électrique ledit module (10) interne, et éventuellement lesdits autres circuits électriques ou capteurs internes,
- une liaison (8, 9) entre chacun des capteurs (3-2, 4-2) et ledit module (10) interne,
à l'extérieur de la boîte à gants (1)
- un module externe (12) à la boîte à gants couplé à l'automate (5) industriel programmable, et à la liaison bidirectionnelle série (11) entre les modules interne (10) et externe (12), pour recevoir les informations multiplexées en provenance des capteurs (3-2, 4-2) et les transmettre audit automate (5) industriel programmable sur des liaisons (15) parallèles, et pour transmettre des informations au module interne (10) par la liaison (11) bidirectionnelle série.
- une ou plusieurs sources (13) lumineuses situées à l'extérieur de la boîte à gants (1) alimentant la ou lesdites cellules (14, 24) photovoltaïques en énergie lumineuse au travers de partie de paroi de la boîte (1) à gants transparente à ladite énergie lumineuse.

2. Ensemble selon la revendication 1 **caractérisé en ce que** le module interne (10) de la boîte à gants comporte :
- un premier microcontrôleur (21) ayant une mémoire et des entrées (34, 35, 36, 37) pour recevoir les données en provenance des capteurs (3-2, 4-2), et des instructions de programme, une première partie logée dans la boîte (1) à gants de la liaison (11) par ondes radiofréquence ou lumineuses comportant,
- une sortie (33) série du premier microcontrôleur (21), pour transmettre un signal électrique composé d'une succession d'impulsions formées par des états logiques hauts et bas, représentant les données en provenance des capteurs,
- un premier circuit (25) interne d'émission couplé à ladite sortie (33) série du premier microcontrôleur (21) et recevant un signal électrique pour moduler une émission dudit premier moyen (16) interne d'émission,
- un premier moyen (16) interne d'émission d'une onde lumineuse ou radiofréquence, couplé au premier circuit (25) interne d'émission,
- un circuit (20) de codage couplé entre la sortie (33) série du premier microcontrôleur (21) et le premier circuit (25) interne d'émission pour former un signal de modulation d'une onde porteuse émise par le premier moyen (16) interne d'émission, le signal modulé émis comportant une absence d'impulsions de sortie pour chaque sortie logique haute du signal électrique présent sur la sortie série du microcontrôleur et une impulsion brève pour chaque sortie logique basse.

3. Ensemble selon la revendication 2 **caractérisé en ce que** le module interne (10) de la boîte à gants (1) comporte en outre :
- un premier moyen (18) interne de réception d'une onde radiofréquence ou lumineuse,
- un premier circuit interne (25) de réception couplé au premier moyen (18) interne de réception pour transformer un signal radiofréquence ou lumineux reçu par le premier moyen (18) interne de réception, en signal électrique,
- une mémoire (22) du microcontrôleur (21) couplée à une entrée (37) du microcontrôleur (21) cette mémoire stockant des données et un programme reçu par le premier moyen (18) interne de réception.

4. Ensemble selon l'une des revendications 1 à 3 dans lequel la boîte à gants (1) renferme au moins un capteur mobile (32) **caractérisé en ce que** la boîte à gants (1) renferme en outre :
- une cellule (24) photovoltaïque dédiée d'alimentation en puissance électrique dudit au moins un capteur mobile (32) couplée électriquement audit au moins un capteur mobile (32),
- un premier circuit (26) de transformation d'un signal électrique provenant dudit au moins un capteur mobile (32) en un signal porté par ondes radiofréquence ou lumineuses couplé à ladite cellule (24) photovoltaïque dédiée,
- un second moyen (29) d'émission dudit signal porté par ondes radiofréquence ou lumineuses couplé audit premier circuit (26) de transformation de signal pour émettre ledit signal en direction d'un premier récepteur (30) couplé au module interne (10).

5. Ensemble selon la revendication 4, **caractérisé en ce que**,
le premier circuit (26) couplé à ladite cellule photovoltaïque (24) dédiée, de transformation d'un signal électrique provenant dudit au moins un capteur mobile (32) en un signal porté par ondes radiofréquence ou lumineuses est également un circuit (26) de transformation d'un signal porté par ondes radiofréquence ou lumineuses en signal électrique, et **en ce que** la boîte à gants loge en outre,
des seconds moyens (28, 29), d'émission et de réception de signal porté par ondes radiofréquence ou lumineuses et couplés audit premier circuit (26) de transformation de signal pour émettre un signal provenant dudit capteur mobile (32) en direction du module interne et recevoir un signal provenant du module interne, le module interne (10) émettant un signal d'interrogation dudit capteur (32) mobile et ledit circuit de transformation transmettant au reçu de cette interrogation dans une fenêtre temporelle prédéterminée, l'état dudit capteur (32) au circuit d'émission et de réception de signal porté par ondes radiofréquence ou lumineuses.

6. Ensemble selon la revendication 5 dans lequel ledit capteur mobile (32) est un capteur (32) d'état d'un interrupteur (31), et dans lequel le second moyen (29) d'émission dudit signal porté par ondes radiofréquence ou lumineuses couplé audit premier circuit (26) de transformation de signal ne transmet un signal d'état dudit capteur que si l'interrupteur est fermé, aucune information d'état n'étant transmise lorsque l'interrupteur est ouvert.

7. Ensemble selon l'une des revendications 5 ou 6 dans lequel une partie réception (28) dudit premier circuit (26) de transformation de signal d'émission et de réception est pourvu de moyens de neutralisation, neutralisant ladite partie réception (28) pendant une période de temps englobant la fenêtre temporelle allouée audit circuit (26) pour transmettre l'état dudit au moins un capteur mobile (32).

8. Ensemble selon l'une des revendications 1 à 7 **caractérisé en ce que** le module (12) externe à la boîte à gants comporte des moyens (17, 19, 45, 40, 43) formant une partie externe de la liaison (11) par ondes lumineuses ou radiofréquence ces moyens comportant :
- un premier moyen (17) externe de réception d'une onde lumineuse ou radiofréquence positionné de façon à recevoir une onde lumineuse ou radiofréquence transmise par le premier moyen interne (16) d'émission d'une onde lumineuse ou radiofréquence
- un premier circuit externe (45) de réception couplé au premier moyen (17) externe de réception d'une onde lumineuses ou radiofréquence,
et **en ce que** le module (12) externe comporte en outre,
- un microcontrôleur (41) externe ayant une entrée série (43) et des sorties (44, 55, 46), l'entrée série (43) étant couplée au premier circuit externe (45) de réception, pour recevoir les données en provenance dudit circuit (45) de réception, les sorties (44, 55, 46) du microcontrôleur (41) externe étant couplées aux liaisons (15) avec l'automate (5) industriel programmable.

9. Ensemble selon la revendication 8 **caractérisé en ce que** le microcontrôleur (41) externe a une sortie (47) couplée à un moyen (48) de visualisation d'une interruption de la liaison (11) entre le module interne (10) et le module externe (12).

10. Ensemble selon l'une des revendication 3 à 9 **caractérisé en ce que** le module externe (12) comporte en outre :
- un premier moyen (19) externe d'émission d'une onde radiofréquence ou lumineuse,
- un premier circuit externe (45) d'émission couplé en sortie au premier moyen (19) externe d'émission et en entrée à une sortie (43) du microcontrôleur externe (41) pour transformer un signal électrique provenant dudit microcontrôleur externe (41) en un signal radiofréquence ou lumineux reçu par le premier moyen (19) externe d'émission.

11. Ensemble selon la revendication 8 en tant qu'elle dépend d'une des revendications 2 à 7 **caractérisé en ce que** un circuit (40) externe de codage est couplé entre l'entrée (43) série du microcontrôleur (41) externe et le circuit (45) externe de réception d'une onde lumineuse, pour former un signal électrique logique d'entrée du microcontrôleur, à partir d'un signal de réception fournit par ledit circuit (45) de réception, ledit signal logique ayant un niveau haut pour chaque absence d'impulsions de sortie du circuit de réception et un niveau logique bas pour chaque impulsion brève en sortie dudit circuit (45) de réception.

## Claims

1. Assembly comprising a glove box (1) inside which are arranged fixedly or movably various sensors of magnitudes, information sensed by these sensors being transmitted by means of transmission through leaktight walls (2) of the glove box to an industrial programmable automaton (5), assembly **characterized in that** the means of transmission between the sensors and the industrial programmable automaton comprise:
inside the glove box (1)
- a module (10) internal to the glove box (1) receiving the said information sensed by each sensor (3-2, 4-2) and multiplexing on a serial bidirectional link (11) based on radiofrequency or light waves through a part (38) of a wall (2) of the glove box that is transparent to the said radiofrequency or light waves, the said information sensed by each sensor (3-2, 4-2),
- one or more photovoltaic cells (14, 24), coupled to the said internal module (10) and possibly to other sensors (32) or electrical circuits (26) internal to the glove box (1) so as to supply electrical power to the said internal module (10), and possibly to the said other electrical circuits or internal sensors,
- a link (8, 9) between each of the sensors (3-2, 4-2) and the said internal module (10),
outside the glove box (1)
- a module (12) external to the glove box and coupled to the programmable industrial automaton (5), and to the serial bidirectional link (11) between the internal (10) and external (12) modules, so as to receive the multiplexed information originating from the sensors (3-2, 4-2) and transmit it to the said programmable industrial automaton (5) over parallel links (15), and to transmit information to the internal module (10) through the serial bidirectional link (11),
- one or more light sources (13) situated outside the glove box (1) supplying the said photovoltaic cell or cells (14, 24) with light energy across part of a wall of the glove box (1) that is transparent to the said light energy.

2. Assembly according to Claim 1, **characterized in that** the internal, module (10) of the glove box comprises:
- a first microcontroller (21) having a memory and inputs (34, 35, 36, 37) for receiving the data originating from the sensors (3-2, 4-2), and program instructions, a first part housed in the glove box (1) of the link (11) based on radiofrequency or light waves comprising
- a serial output (33) of the first microcontroller (21) for transmitting an electrical signal composed of a succession of pulses formed by high and low logic states, representing the data originating from the sensors,
- a first emission internal circuit (25) coupled to the said serial output (33) of the first microcontroller (21) and receiving an electrical signal so as to modulate an emission of the said first internal, means (16) of emission,
- a first internal means (16) of emission of a light wave or radiofrequency wave, coupled to the first internal emission circuit (25),
- a coding circuit (20) coupled between the serial output (33) of the first microcontroller (21) and the first internal emission circuit (25) so as to form a modulation signal for a carrier wave emitted by the first internal means (16) of emission, the modulated signal emitted comprising an absence of output pulses for each high logic output of the electrical signal present on the serial output of the microcontroller and a brief pulse for each low logic output.

3. Assembly according to Claim 2, **characterized in that** the internal module (10) of the glove box (1) furthermore comprises:
- a first internal means (18) of reception of a radiofrequency or light wave,
- a first internal reception circuit (25) coupled to the first internal means (18) of reception so as to transform a radiofrequency or light signal received by the first internal means (18) of reception into an electrical signal,
- a memory (22) of the microcontroller (21), coupled to an input (37) of the microcontroller (21), this memory storing data and a program received by the first internal means (18) of reception.

4. Assembly according to one of Claims 1 to 3, in which the glove box (1) encloses at least one movable sensor (32), **characterized in that** the glove box (1) furthermore encloses:
- a photovoltaic cell (24) dedicated to supplying electrical power to the said at least one movable sensor (32) and coupled electrically to the said at least one movable sensor (32),
- a first circuit (26) for transforming an electrical signal originating from the said at least one movable sensor (32) into a signal carried by radiofrequency or light waves coupled to the said dedicated photovoltaic cell (24),
- a second means (29) of emission of the said signal carried by radiofrequency or light waves, coupled to the said first signal transformation circuit (26) so as to emit the said signal towards a first receiver (30) coupled to the internal module (10).

5. Assembly according to Claim 4, **characterized in that**
the first circuit (26) coupled to the said dedicated photovoltaic cell (24) for transforming an electrical signal originating from the said at least one movable sensor (32) into a signal carried by radiofrequency or light waves is also a circuit (26) for transforming a signal carried by radiofrequency or light waves into an electrical signal, and **in that** the glove box furthermore houses
second means (28, 29) of emission and reception of a signal carried by radiofrequency or light waves and that are coupled to the said first signal transformation circuit (26) so as to emit a signal originating from the said movable sensor (32) towards the internal module and receive a signal originating from the internal module, the internal module (10) emitting a signal for interrogating the said movable sensor (32) and the said transformation circuit transmitting on receipt of this interrogation in a predetermined time window, the state of the said sensor (32) to the circuit for emission and reception of a signal carried by radiofrequency or light waves.

6. Assembly according to Claim 5 in which the said movable sensor (32) is a sensor (32) of the state of a switch (31), and in which the second means (29) of emission of the said signal carried by radiofrequency or light waves, coupled to the said first signal transformation circuit (26), transmits a state signal. from the said sensor only if the switch is closed, no state information being transmitted when the switch is open.

7. Assembly according to one of Claims 5 or 6, in which a reception part (28) of the said first emission and reception signal transformation circuit (26) is provided with neutralization means, neutralizing the said reception part (28) during a period of time encompassing the time window allocated to the said circuit (26) for transmitting the state of the said at least one movable sensor (32).

8. Assembly according to one of Claims 1 to 7, **characterized in that** the module (12) external to the glove box comprises means (17, 19, 45, 40, 43) forming an external part of the link (11) based on light waves or radiofrequency waves, these means comprising:
- a first external means (17) of reception of a light wave or radiofrequency wave, positioned in such a way as to receive a light wave or radiofrequency wave transmitted by the first internal means (16) of emission of a light wave or radiofrequency wave
- a first external reception circuit (45) coupled to the first external means (17) of reception of a light wave or radiofrequency wave,
- and **in that** the external module (12) furthermore comprises
- an external microcontroller (41) having a serial input (43) and outputs (44, 55, 46), the serial input (43) being coupled to the first external reception circuit (45), so as to receive the data originating from the said reception circuit (45), the outputs (44, 55, 46) of the external microcontroller (41) being coupled to the links (15) with the programmable industrial automaton (5).

9. Assembly according to Claim 8, **characterized in that** the external microcontroller (41) has an output (47) coupled to a means (48) of displaying an interruption of the link (11) between the internal module (10) and the external module (12).

10. Assembly according to one of Claims 3 to 9, **characterized in that** the external module (12). furthermore comprises:
- a first external means (19) of emission of a radiofrequency or light wave,
- a first external emission circuit (45) coupled at output to the first external means (19) of emission and at input to an output (43) of the external microcontroller (41) so as to transform an electrical signal originating from the said external microcontroller (41) into a radiofrequency or light signal received by the first external means (19) of emission.

11. Assembly according to Claim 8 so long as it depends on one of Claims 2 to 7, **characterized in that** an external coding circuit (40) is coupled between the serial input (43) of the external microcontroller (41) and the external circuit (45) for receiving a light wave, so as to form an input logic electrical signal of the microcontroller, on the basis of a reception signal provided by the said reception circuit (45), the said logic signal having a high level for each absence of output pulses of the reception circuit and a low logic level for each brief pulse output by the said reception circuit (45).

## Patentansprüche

1. System mit einem Handschuhkasten (1), in dessen Innern verschiedene Größensensoren fest oder beweglich angeordnet sind, wobei durch diese Sensoren erfasste Informationen mittels Übertragungseinrichtungen durch eine dichte Wand (2) des Handschuhkastens hindurch in Richtung eines programmierbaren Industrieautomaten (5) übertragen werden, wobei dieses System
**dadurch gekennzeichnet ist, dass** die Übertragungseinrichtungen zwischen den Sensoren und dem programmierbaren Industrieautomaten umfassen:
innerhalb des Handschuhkastens (1):
- einen internen Modul (10), der die durch jeden Sensor (3-2, 4-2) erfassten Informationen empfängt und über eine bidirektionale serielle Verbindung (11) mittels Funkfrequenz- oder Lichtwellen durch einen Teil (38) der Wand (2) des Handschuhkastens hindurch, der durchlässig ist für die genannten Funkfrequenz- oder Lichtwetten diese durch jeden Sensor (3-2, 4-2) erfassten Informationen multiplexiert,
- eine oder mehrere Fotovoltaik-Zellen (14, 24), gekoppelt mit dem genannten internen Modul (10) und eventuell mit anderen internen Sensoren (32) oder elektrischen Schaltungen (26) in dem Handschuhkasten (1), um den genannten internen Modul (10) sowie eventuell die genannten, anderen internen elektrischen Schaltungen oder Sensoren mit elektrischer Energie zu versorgen,
- eine Verbindung (8, 9) zwischen jedem der Sensoren (3-2, 4-2) und dem genannten internen Modul (10)
außerhalb des Handschuhkastens (1):
- einen externen Modul (12), gekoppelt mit dem programmierbaren Industrieautomaten (5), und eine bidirektionale serielle Verbindung (11) zwischen dem internen (10) und dem externen (12) Modul, um die von den Sensoren (3-2, 4-2) stammenden multiplexierten Informationen zu empfangen und über parallele Verbindungen (15) zu dem genannten programmierbaren Industrieautomaten (5) zu übertragen, und um durch die bidirektionale serielle Verbindung (11) Informationen zu dem internen Modul (10) zu übertragen;
- eine oder mehrere Lichtquellen (13), außerhalb des Handschuhkastens (1) befindlich, zur Versorgung der genannte(n) Fotovoltaikzelle(n) (14, 24) mit Lichtenergie, durch den für die genannte Lichtenergie durchlässigen Teil der Wand des Handschuhkastens (1) hindurch.

2. System nach Anspruch 1, **dadurch gekennzeichnet, dass** der interne Modul (10) des Handschuhkastens umfasst:
- einen ersten Mikrocontroller (21) mit einem Speicher und Eingängen (34, 35, 36, 37), um die von den Sensoren (3-2, 4-2) stammenden Daten sowie Programminstruktionen zu empfangen, wobei ein erster, in dem Handschuhkasten befindlicher Teil der Funk- oder Lichtwellenverbindung (11) umfasst:
- einen seriellen Ausgang (33) des ersten Mikrocontrollers (21), um ein elektrisches Signal zu übertragen, zusammengesetzt aus einer Folge von Impulsen, gebildet durch Hoch- und Tief-Logikzustände, welche die von den Sensoren stammenden Daten darstellen,
- eine interne erste Sendeschaltung (25), gekoppelt mit dem genannten seriellen Ausgang (33) des ersten Mikrocontrollers (21), die ein eiektrisches Signal empfängt, um eine Sendung der genannten internen ersten Sendeeinrichtung (16) zu modulieren,
- eine interne erste Sendeeinrichtung (16) einer Licht- oder Funkfrequenzwelle, gekoppelt mit der internen ersten Sendeschaltung (25),
- eine Codierschaltung (20), geschaltet zwischen dem seriellen Ausgang (33) des ersten Mikrocontrollers (21) und der ersten internen Sendeschaltung (25), um ein Signal zur Modulation einer durch die interne erste Sendeeinrichtung (16) gesendeten Trägerwelle zu bilden, wobei das gesendete modulierte Signal für jeden an dem seriellen Ausgang des Mikrocontrollers präsenten logischen Hochpegelausgang des elektrischen Signals ein Fehlen von Ausgangsimpulsen umfasst und für jeden logischen Tiefpegelausgang einen kurzen Impuls.

3. System nach Anspruch 2, **dadurch gekennzeichnet, dass** der interne Modul (10) des Handschuhkastens (1) außerdem umfasst:
- eine interne erste Empfangseinrichtung (18) einer Funkfrequenz- oder Lichtwelle,
- eine interne erste Empfangsschaltung (25), gekoppelt mit der internen ersten Empfangseinrichtung (18), um ein durch die interne erste Empfangseinrichtung (18) empfangenes Funkfrequenz- oder Lichtsignal in ein elektrisches Signal umzuwandeln,
- einen Speicher (22) des Mikrocontrollers (21), gekoppelt mit einem Eingang (37) des Mikrocontrollers (21), wobei dieser Speicher Daten und ein Programm speichert, empfangen durch die interne erste Empfangseinrichtung (18).

4. System nach einem der Ansprüche 1 bis 3, bei dem der Handschuhkasten (1) wenigstens einen beweglichen Sensor (32) einschließt, **dadurch gekennzeichnet, dass** der Handschuhkasten (1) außerdem einschließt:
- eine Fotovoltaik-Zelle (24), der Versorgung des genannten, wenigstens einen beweglichen Sensors (32) dienend und elektrisch mit dem genannten, wenigstens einen beweglichen Sensor (32) gekoppelt,
- eine erste Umwandlungsschaltung (26) eines von dem wenigstens einen beweglichen Sensor (32) stammenden elektrischen Signals in ein durch Funkfrequenz- oder Lichtwellen getragenes Signal, gekoppelt mit der genannten Fotovoltaik-Zelle (24),
- eine zweite Sendeeinrichtung (29) des genannten, durch Funkfrequenz- oder Lichtwellen getragenes Signals, gekoppelt mit der genannten ersten Umwandlungsschaltung (26) des Signals, um das genannte Signal in Richtung eines mit dem internen Modul (10) gekoppelten ersten Empfängers (30) zu senden.

5. System nach Anspruch 4, **dadurch gekennzeichnet, dass** die mit der genannten Fotovoltaik-Zelle (24) gekoppelte erste Umwandlungsschaltung (26) eines von dem wenigstens einen beweglichen Sensor (32) stammenden elektrischen Signals in ein durch Funkfrequenz- oder Lichtwellen getragenes Signal ebenfalls eine Umwandlungsschaltung eines durch Funkfrequenz- oder Lichtwellen getragenen Signals in ein elektrisches Signal ist, und dadurch, dass der Handschuhkasten außerdem umfasst:
zweite Sende- und Empfangseinrichtungen (28, 29) eines durch Funkfrequenz- oder Lichtwellen getragenen Signals, gekoppelt mit den genannten ersten Signalumwandlungseinrichtungen (26), um ein von dem genannten beweglichen Sensor (32) stammendes Signal in Richtung des internen Moduls zu senden und ein von dem internen Modul stammendes Signal zu empfangen, wobei der interne Modul (10) ein Signal zur Abfrage des genannten beweglichen Sensors (32) sendet und die genannte Umwandlungsschaltung beim Empfang dieser Abfrage in einem festgelegten Zeitfenster den Zustand des genannten Sensors (32) zu der Sende- und Empfangsschaltung des durch Funkfrequenz- oder Lichtwellen getragenen Signals überträgt.

6. System nach Anspruch 5, bei dem der genannte bewegliche Sensor (32) ein Zustandssensor (32) eines Schalter (31) ist, und bei dem die zweite Sendeeinrichtung (29) des genannten, durch Funkfrequenz- oder Lichtwellen getragenen Signals, gekoppelt mit der genannten ersten Signalumwandlungsschaltung (26), ein Zustandssignal des genannten Schalters nur überträgt, wenn der Schalter geschlossen ist, so dass keine Zustandsinformation übertragen wird, wenn der Schalter geöffnet ist.

7. System nach einem der Ansprüche 5 oder 6, bei dem ein Empfangsteil (28) der genannten ersten Sende- und Empfangs-Signalumwandlungsschaltung (26) mit Neutrafisierungseinrichtungen ausgestattet ist, die den genannten Empfangsteil (28) während. einer Zeitperiode neutralisieren, die das Zeitfenster einschließt, das der genannten Schaltung (26) zugeteilt ist, um den Zustand des genannten, wenigstens einen beweglichen Sensors (32) zu übertragen.

8. System nach einem der Ansprüche 1 bis 7,
**dadurch gekennzeichnet, dass** der außerhalb des Handschuhkastens befindliche externe Modul (12) Einrichtungen (17, 19, 45, 40, 43) umfasst, die einen externen Teil der Funkfrequenz- oder Lichtwellenverbindung (11) bilden, wobei diese Einrichtungen umfassen:
- eine externe erste Empfangseinrichtung (17) einer Funkfrequenz- oder Lichtwelle, so positioniert, dass sie eine durch die interne erste Sendeeinrichtung (16) einer Funkfrequenz- oder Lichtwelle übertragene Funkfrequenz- oder Lichtwelle empfängt,
- eine externe erste Empfangsschaltung (45), gekoppelt mit der externen ersten Empfangsschaltung einer Funkfrequenz- oder Lichtwelle,
und dadurch, dass der externe Modul (12) außerdem umfasst:
- einen externen Mikrocontroller (41) mit einem seriellen Eingang (43) und Ausgängen (44, 55, 46), wobei der serielle Eingang (43) mit der externen ersten Schaltung (45) gekoppelt ist, um die von der genannten Empfangsschaltung (45) stammenden Daten zu empfangen, wobei die Ausgänge (44, 55, 46) des externen Mikrocontrollers (41) gekoppelt sind mit den Verbindungen (15) mit dem programmierbaren Industrieautomaten (5).

9. System nach Anspruch 8, **dadurch gekennzeichnet, dass** der externe Mikrocontroller (41) einen Ausgang (47) hat, der gekoppelt ist mit einer Einrichtung (48) zur Sichtbarmachung einer Unterbrechung der Verbindung (11) zwischen dem internen Modul (10) und dem externen Modul (12).

10. System nach einem der Ansprüche 3 bis 9, **dadurch gekennzeichnet, dass** der externe Modul (12) außerdem umfasst:
- eine externe erste Sendeeinrichtung einer Funkfrequenz- oder Lichtwelle,
- eine externe erste Sendeschaltung (45), mit dem Ausgang mit der externen ersten Sendeeinrichtung (19) gekoppelt und mit dem Eingang mit einem Ausgang (43) des externen Mikrocontrollers (41), um ein von dem genannten externen Mikrocontroller (41) stammendes elektrisches Signal umzuwandeln in ein durch die externe erste Empfangseinrichtung (19) empfangenes Funkfrequenz- und Lichtsignal.

11. System nach Anspruch 8 sofern abhängig von einem der Ansprüche 2 bis 7, **dadurch gekennzeichnet, dass** eine externe Codierschaltung (40) zwischen dem seriellen Eingang (43) des Mikrocontrollers (41) und der externen Empfangsschaltung (45) geschaltet ist, um ein logisches elektrisches Eingangssignal des Mikrocontrollers aufgrund eines durch die genannte Empfangsschaltung (45) gelieferten Empfangssignals zu bilden, wobei das genannte logische Signal bei jedem Fehlen von Ausgangsimpulsen der Empfangsschaltung einen Hochpegel aufweist und für jeden kurzen Ausgangsimpuls der genannten Empfangsschaltung (45) einen logischen Tiefpegel.
